# EUROPÄISCHE PATENTSCHRIFT

(11) **EP 2 171 815 B1**
(45) Veröffentlichungstag und Bekanntmachung des Hinweises auf die Patenterteilung: **04.09.2013**
(21) Anmeldenummer: 08801491.5
(22) Anmeldetag: 21.07.2008
(51) Int. Cl.: H02B 1/30

(54) **ELEKTRISCHER SCHALTSCHRANK**
ELECTRICAL SWITCHGEAR CABINET
ARMOIRE DE DISTRIBUTION ÉLECTRIQUE

(30) Priorität: 24.07.2007 DE 102007034513
(43) Veröffentlichungstag der Anmeldung: 07.04.2010
(73) Patentinhaber: ABB AG, 68309 Mannheim (DE)
(72) Erfinder: ROTH, Michael, 77880 Sasbach (DE)
(86) Internationale Anmeldenummer: PCT/EP2008/005963
(87) Internationale Veröffentlichungsnummer: WO 2009/012962

(56) Entgegenhaltungen:
- EP-A- 0 935 324
- EP-A- 1 229 620

## Beschreibung

Die Erfindung betrifft einen elektrischen Schaltschrank für eine Installationsverteilung gemäß dem Oberbegriff des Anspruches 1. Das Dokument EP 09 35 324 offenbart einen Schaltschrank gemäss dem oberbegrift des Anspruchs 1. Derartige Schaltschränke für elektrische Installationsverteilungen besitzen eine Rückwand, zwei Seitenwände, eine Boden- und eine Deckwand, die miteinander an ihren Kanten verschweißt werden. An einer der vertikalen, nach vorne wegweisenden freien Kanten des Schaltschrankes ist eine Tür gelenkig angebracht, durch die hindurch der Innenraum des Schaltschrankes zugänglich beziehungsweise verschließbar ist.

Der Nachteil bei dieser konstruktiven Lösung besteht darin, dass der Schaltschrank selbst nicht zerlegbar ist, sondern fabrikseitig hergestellt werden muss, was für den Transport ungünstig ist.

Aufgabe der Erfindung ist es, einen elektrischen Schaltschrank der eingangs genannten Art zu schaffen, der für Transportzwecke zerlegbar und darüber hinaus auch einfach montierbar ist.

Diese Aufgabe wird erfindungsgemäß gelöst mit den Merkmalen des Anspruches 1.

Erfindungsgemäß also besitzt die Rückwand eine umlaufende, L-förmige Abkantung, weiterhin ein Befestigungsteil für die Seitenwände, die Boden- und die Deckwand, wobei das Befestigungsteil im Bereich der Ecken mit Vorsprüngen hinter die Abkantungen einschiebbar ist; die Seitenwände, die Boden- und Deckwände werden dann mit Wandabkantungen in längs verlaufende Schlitze am Befestigungsteil eingeschoben.

In einer bevorzugten Ausführungsform sind die Wandabkantungen an der Boden-und Deckwand sowie an den Seitenwänden etwa L-förmig mit einem senkrecht zur Wandfläche verlaufenden Abkantungssteg und einem daran anschließenden Abkantungsschenkel versehen, wobei letzterer in je einen Längsschlitz am Befestigungsteil einschiebbar ist.

Gemäß einer vorteilhaften Ausgestaltung der Erfindung ist zur besseren Montage der Abkantungsschenkel der Wandabkantungen in einem bestimmten Winkel in Richtung Innenfläche, ausgehend vom Abkantungssteg, abgebogen Dieser Winkel beträgt vorzugsweise 45°. Mit der Innenfläche der zugehörigen Seitenwände, der Boden-und Deckwand bildet der Abkantungssteg einen Winkel von 45°.

Diesem Winkel ist die Ausrichtung der Schlitze im Befestigungsteil angepasst, so dass die Schlitze im Befestigungsteil parallel zueinander verlaufen und ebenfalls unter diesem Winkel bezogen auf die Seitenkante der Rückwand ausgerichtet sind. Wenn der bestimmte Winkel 45° beträgt, verlaufen die Schlitze ebenfalls unter einem Winkel von 45° bezogen auf besagte Seitenkante.

Der Winkel ca. 45° oder vielleicht auch genau 45° hat den Vorteil einer optimalen Fertigungsmöglichkeit.

In einer besonders vorteilhaften Ausgestaltung zur Verbesserung der Montage ist an dem rückwandseitigen Ende des Befestigungsteils eine Halteplatte, auch Haltefuß genannt, angeformt, die parallel zur Rückwandfläche, auf dieser gleitend, in das jeweilige Eck hinter die freien Schenkel der L-förmigen ersten Abkantungen einschiebbar ist.

Dabei ist am Haltefuß in vorteilhafter Weise ein Aufnahmespalt vorgesehen, in den im montierten Zustand die Schenkel der ersten Abkantungen eingreifen.

Innerhalb des Aufnahmespaltes können dabei sägezahnartige Zapfen angeordnet sein, die im montierten Zustand in Aussparungen in den Schenkeln der ersten Abkantungen eingreifen.

Die Zapfen verlaufen dabei parallel zur Einschieberichtung des Haltefußes auf das zugehörige Eck.

An dem Halte- oder Befestigungsfuß können weitere Aufnahmeschlitze angeformt sein, in die weitere Abkantungen an den Seitenwänden, an der Deck- und an der Bodenwand einfügbar sind beziehungsweise eingreifen.

Das Befestigungsteil weist in vorteilhafter Weise einen Befestigungsabschnitt auf, der an dem Haltefuß angeformt ist.

Dieser Befestigungsteil kann in bevorzugter Weise eine L-Form aufweisen; die bezogen auf den Schaltschrank nach außen gerichteten Außenflächen der Schenkel des Befestigungsabschnittes bilden zusammen mit einem schräg dazu verlaufenden Steg einen Aufnahmeraum, wobei die Schlitze an der Übergangsstelle zwischen den Außenflächen und dem Steg angeordnet sind.

Der Aufnahmespalt befindet sich dabei im Bereich des Aufnahmeraumes zwischen den Schenkelflächen (auch Außenflächen genannt) und der Stegfläche.

In diesen Außenflächen sind in geeignetem Abstand zueinander Längsschlitze vorgesehen, deren Aufgabe weiter unten näher dargestellt ist.

In den Aufnahmeraum zwischen den Schenkelfläche oder Außenflächen und dem Steg oder der Stegfläche kann ein Außeneckteil aufgesetzt werden, welches zwecks verbesserter Montage vom Innenraum des Schaltschrankes aus mit dem Befestigungsabschnitt verschraubt wird.

Das Außeneckteil kann dabei in bevorzugter Weise einen etwa rechteckigen Querschnitt aufweisen, wobei zwischen zwei senkrecht zueinander verlaufenden Eckteilebenen eine Passfläche vorgesehen ist, die der Stegfläche des Steges entspricht, so dass die Ebenen und die Passfläche jeweils parallel zu den Schenkelflächen und zur Stegfläche am Befestigungsteil verlaufen, wenn das Außeneckteil montiert ist.

An den Befestigungsebenen des Außeneckteils sind Vorsprünge angeformt, die im montierten Zustand in die entsprechenden Schlitze an den Außenflächen oder Schenkelflächen des Befestigungsteils eingreifen.

Darüber hinaus sind auch an den Abkantungsstegen der Seitenwandungen, der Boden- und der Deckwand den Schlitzen entsprechende Schlitze vorgesehen und bei der Montage des Außeneckteils zur Verspannung der Seitenwände, der Deck-und der Bodenwand an dem Befestigungsteil greifen die Vorsprünge durch die Schlitze an den zweiten Abkantungen und die Schlitze am Befestigungsteil zur Fixierung der Wände hindurch.

Damit der Schaltschrank der Norm IP54 genügt, besitzt das Außeneckteil jeweils Dichtlippen aus weichelastischem Material, die sich gegen die Seitenwände anlegen.

Weitere vorteilhafte Ausgestaltungen der Erfindung und weitere vorteilhafte Verbesserungen sind den weiteren Unteransprüchen zu entnehmen.

Anhand der Zeichnungen, in der ein Schaltschrank in unterschiedlichen Montageschritten dargestellt ist, soll die Erfindung näher erläutert und beschrieben werden.

Es zeigen
- Fig. 1: eine Einsicht in einen fertig montierten erfindungsgemäßen Schaltschrank,
- Fig. 2, 3 und 4: unterschiedliche Montageschritte zur Montage eines Befestigungsteils an der Rückwand,
- Fig. 5: eine Schnittansicht gemäß Schnittlinie V-V der Fig. 3, wobei das Befestigungsteil montiert ist,
- Fig. 6: eine Aufsicht auf den Eckbereich eines Schaltschrankes in einem weiteren Montageschritt, von der Rückseite der Rückwand her gesehen,
- Fig. 7: eine Ansicht ähnlich der der Fig. 6 auf ein Befestigungsteil vor Einfügen einer Seitenwand,
- Fig. 8: ein weiterer Montageschritt,
- Fig. 9: einen Einblick in einen Schaltschrank im Bereich des rechten unteren Eckes nach Montage der Boden- und Seitenwand, vor Aufsetzen des Außeneckteils und
- Fig. 10: den fertig montierten Schaltschrank.

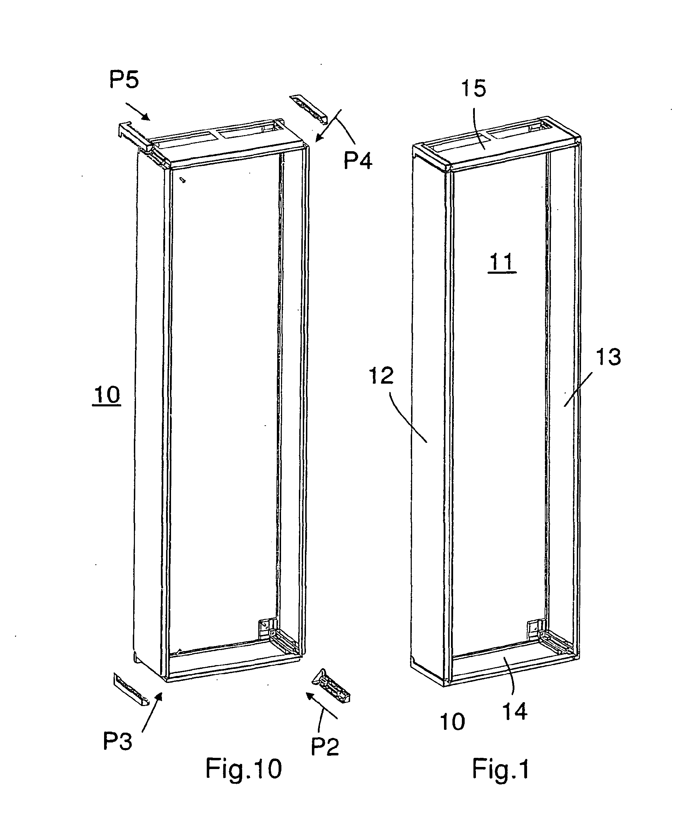

Es sei nun Bezug genommen auf die Fig. 1.

Die Fig. 1 zeigt einen Einblick in einen Schaltschrank 10, der eine Rückwand 11, zwei Seitenwände 12 und 13, eine Bodenwand 14 und eine Deckwand 15 aufweist. Einbauten und die Fronttür sind nicht gezeichnet.

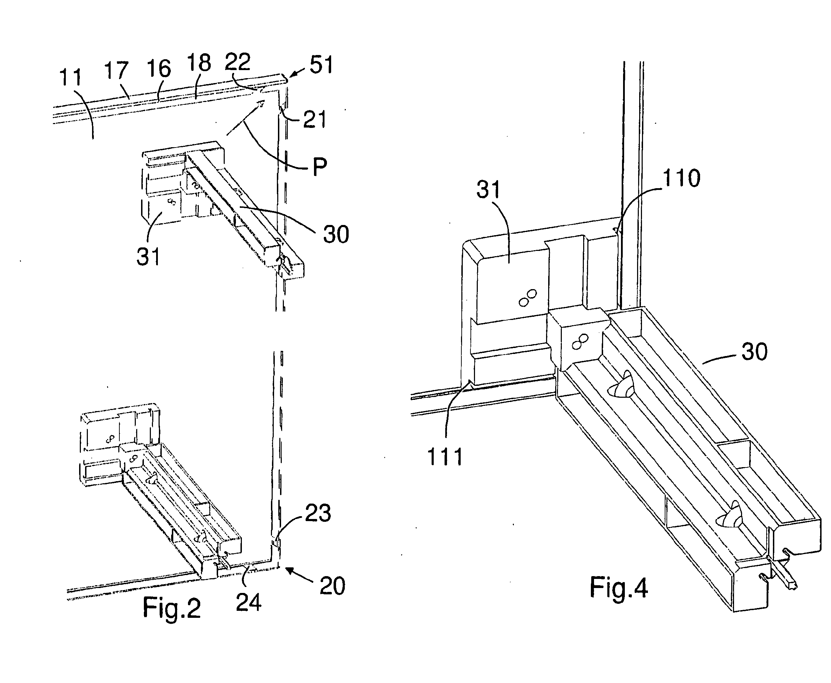

Es wird nun Bezug genommen auf die Fig. 2.

Die Fig. 2 zeigt eine perspektivische Ansicht auf den rechten Bereich der Innenseite der Rückwand 11, die umlaufende, nach innen vorspringende Abkantungen 16 aufweist, die einen senkrecht zur Rückwand verlaufenden Steg 17 und einen senkrecht dazu verlaufenden Schenkel 18 aufweisen, wobei der Schenkel 18 parallel zur Innenfläche der Rückwand 11 verläuft.

Im Bereich der Ecken, von denen nur die rechte obere Ecke 19 und die rechte untere Ecke 20 dargestellt sind, befinden sich in den Schenkeln 18 schräg verlaufende

Aussparungen 21, 22 beziehungsweise 23 und 24, auch Schlitze genannt, die bezogen auf die benachbarte vertikale beziehungsweise horizontale Seitenkante der Rückwand 11 einen Winkel von 45° bilden, wobei die offene Seite des Winkels von 45° zum benachbarten Eck 19 beziehungsweise 20 geöffnet ist.

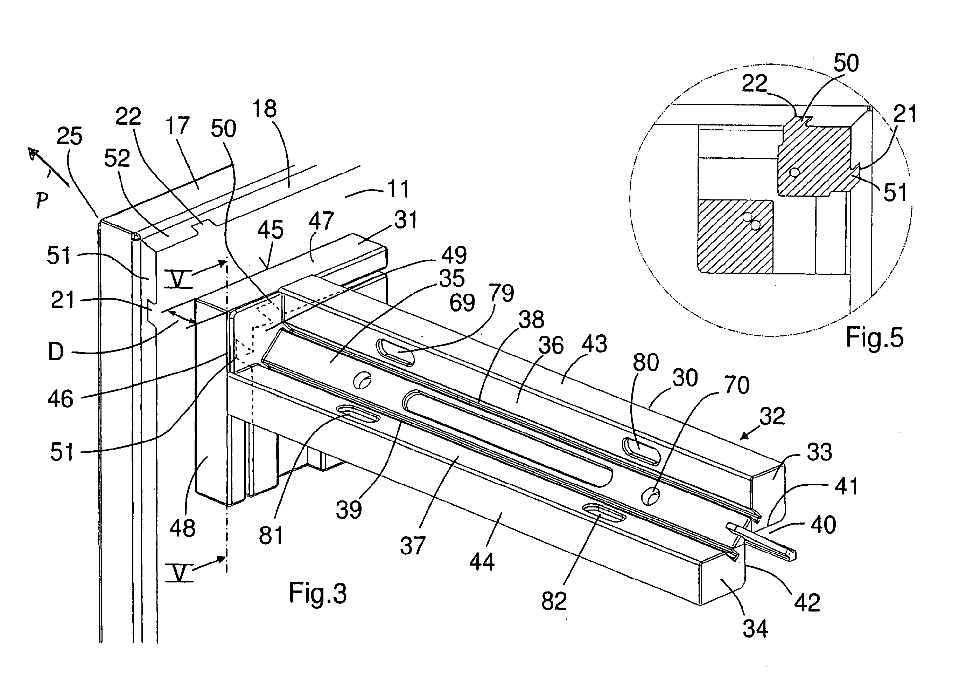

Es sei nun Bezug genommen auf die Fig. 3.

Im Gegensatz zu der Ansicht der Fig. 2 ist hier eine perspektivische Ansicht der linken oberen Ecke 25 des Schaltschrankes dargestellt, wobei zur Darstellung der Identität die einzelnen Elemente die gleichen Bezugsziffern erhalten haben.

An der Rückwand 11 sind entsprechend der Anzahl der Ecken 19, 20, 25 vier Befestigungsteile 30 vorgesehen, die einen Befestigungsfuß oder eine Befestigungs-oder Halteplatte 31 aufweisen, mit der das Befestigungsteil 30 gemäß Pfeilrichtung P in die jeweilige Ecke 19 beziehungsweise 20 beziehungsweise 25 eingefügt werden kann (siehe auch Fig. 2).

Das Befestigungsteil 30 besitzt einen ersten Befestigungsabschnitt 32, der im Querschnitt etwa eine L-Form mit zwei Schenkeln 33 und 34 aufweist, wobei die beiden Schenkel 33 und 34 über einen Zwischensteg 35 verbunden sind und zusammen den Befestigungsabschnitt 32 bilden. Auf der Innenseite besitzen die Schenkel 33 und 34 jeweils eine Schenkelfläche 36 und 37, die senkrecht zueinander verlaufen; zwischen dem Steg 35, der zu den Schenkelflächen 36 und 37 einen Winkel von 45° einnimmt, und den jeweiligen Schenkelflächen 36, 37 sind längs verlaufende parallel zueinander und senkrecht zum Steg 35 angeordnete Schlitze 38 und 39 vorgesehen, deren Aufgabe weiter unten näher erläutert ist. Auf der Außenseite befindet sich zwischen den beiden Schenkeln 33 und 34 eine Aussparung 40, wobei die Seitenwände 41 und 42 der Aussparung 40 senkrecht zur Schenkelfläche 36 beziehungsweise 37 verlaufen.

Der Befestigungsabschnitt 32 ist mit der Halteplatte 31, auch Haltefuß genannt, einstückig verbunden, wobei der Haltefuß 31 senkrecht zu der Längserstreckung der Schenkel 33 und 34 beziehungsweise senkrecht zur Längserstreckung des Befestigungsabschnittes 32 verläuft.

Der Befestigungsabschnitt 32 ist dabei unsymmetrisch am Haltefuß 31 angeformt, so dass die senkrecht zu den Schenkelflächen 36 und 37 verlaufenden Außenflächen 43 und 44 im montierten Zustand in Höhe der Außenfläche der Stege 17 liegen und sich etwa in der Ebene der Schmalseitenflächen 47 und 48 befinden. Der Haltefuß 31 ist etwa quadratisch und der Befestigungsabschnitt 32 ist im Bereich einer der Ecken des Haltefußes 31 angebracht. Der zwischen den Schenkelflächen 36, 37 und der Stegfläche 35 befindliche Raum 49 ist zur Ecke, die die beiden Schmalseitenwände 47, 48 untereinander bilden, offen und schließt an diese Ecke an.

Der Haltefuß 31 besitzt im Abstand von der auf der Innenfläche der Rückwand im montierten Zustand aufstehenden, in Fig. 3 nicht sichtbaren Außenfläche einen Aufnahmespalt 46, der im Bereich der Schmalseitenflächen 47 und 48 des Haltefußes 31 innerhalb des durch die Schenkelflächen 36, 37 und den Steg 35 befindlichen Raumes 49 vorgesehen ist. Der Aufnahmespalt 46 befindet sich somit bezogen auf den Schaltschrankinnenraum außerhalb des Befestigungsabschnittes 32 und die Schenkel 18 liegen innerhalb des Befestigungsabschnittes auf dem Haltefuß auf, bezogen auf den Schaltschrank.

Die Fig. 5 zeigt einen Schnitt durch den Aufnahmespalt 46 gemäß Schnittlinie VI-VI und man erkennt innerhalb des Aufnahmespaltes 46 sägezahnartige Zapfen 50 und 51, die so bemessen sind, dass sie in die Aussparungen 21, 22 beziehungsweise 23, 24 eingreifen können.

Demgemäß wird das Befestigungsteil 30 mit der Außenfläche 45 des Befestigungsfußes 31 auf die Innenfläche der Rückwand 11 aufgesetzt und danach in Pfeilrichtung P in das jeweilige Eck hineingeschoben, so dass die zwischen den Aussparungen 21 und 22 und dem zugehörigen Eck 25 befindlichen Abschnitte 52, 52a der Schenkel 18 in den Aufnahmespalt 46 und die sägezahnförmigen Vorsprünge oder Zapfen, die innerhalb des Aufnahmespaltes 46 vorhanden sind, in die Aussparungen 21 und 22 eingreifen. In der Fig. 3 ist die Innenkontur des Aufnahmespaltes 46 mit den sägezahnartigen Vorsprüngen 50 und 51 strichliert dargestellt. Die Dicke des Befestigungsfußes 31, bezogen auf den Schaltschrank, innerhalb des Befestigungsabschnittes 32 entspricht der Dicke D, das heißt dem Abstand von der Innenfläche der Rückwand 11 bis zur Innenfläche des Schenkels 18.

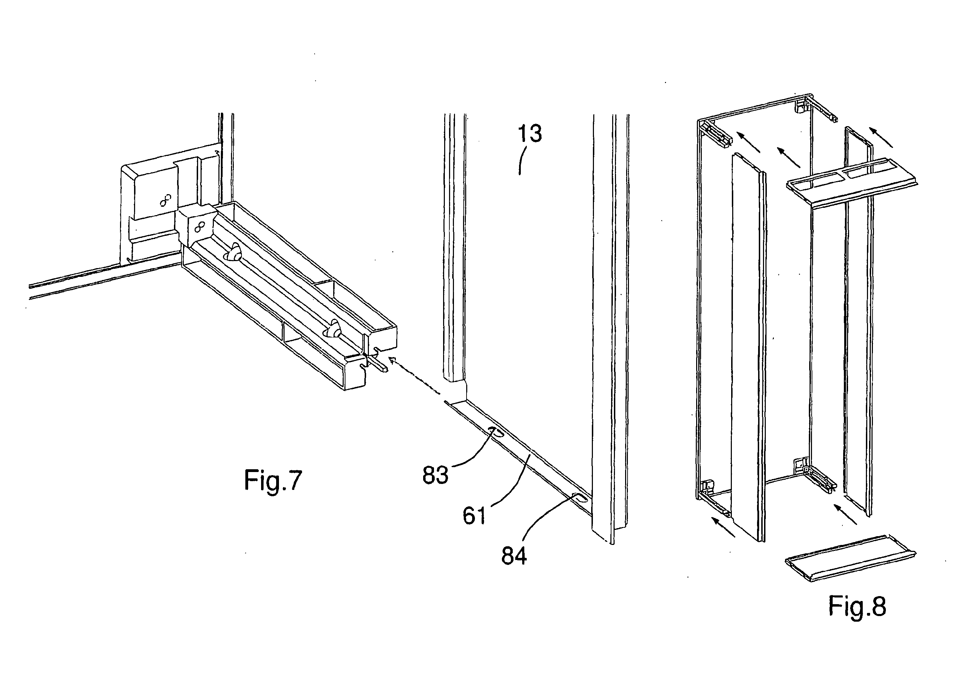

Die Fig. 4 zeigt das Befestigungsteil 30 im endgültig montierten Zustand, wenn somit der Haltefuß oder Befestigungsfuß 31 hinter die Schenkel 18 der umlaufenden Abkantung 16 gesteckt ist. Innerhalb der freien Kante der Schenkel 18 und innerhalb des Befestigungsabschnittes 31 besitzt der Haltefuß 31 je eine parallel zur benachbarten Kante der Schenkel 18 je einen Aufnahmeschlitz 110, 111, siehe weiter unten. Die Fig. 4 zeigt das Befestigungsteil 30 im Bereich der rechten unteren Ecke des Schaltschrankes. Alle Befestigungsteile 30 sind gleich und nur entsprechend der Montagestelle um jeweils 90° gegenüber dem benachbarten Befestigungsteil 30 gedreht, wie aus Fig. 2, Fig. 3, Fig. 4 und auch Fig. 8 ersichtlich ist.

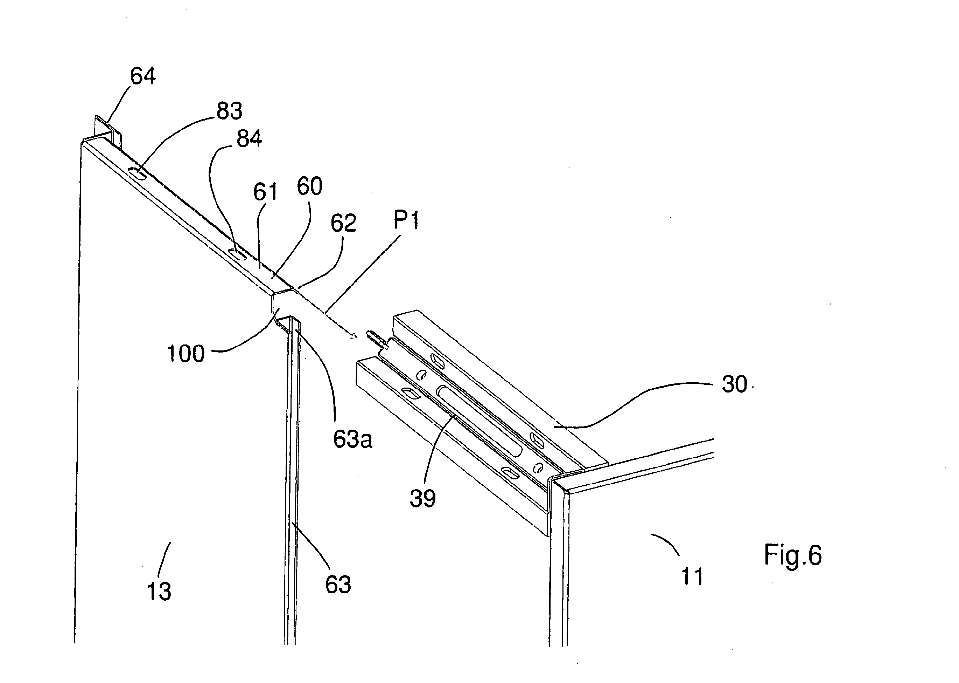

Es sei nun Bezug genommen auf die Fig. 6.

Dort ist die Rückwand 11 perspektivisch von hinten dargestellt, wobei an der Rückwand 11 das Befestigungsteil 30 fixiert ist.

Die Seitenwand 13 soll nun montiert werden, was wie folgt durchgeführt wird:
An ihrer oberen und unteren horizontal verlaufenden Kante besitzt die Seitenwand 13 eine L-förmige Abkantung 60, die einen senkrecht zur Seitenwand 13 verlaufenden Abkantungssteg 61 und einen unter einem Winkel von 45° dazu abgebogenen Abkantungsschenkel 62 aufweist, wobei der Winkel zwischen dem Abkantungssteg 61 und dem Abkantungsschenkel 62 auf der Innenseite der Abkantung 60 135° beträgt.
An den vertikal verlaufenden Seitenkanten der Seitenwand 13 sind weitere Abkantungen 63 und 64 vorgesehen. Die Abkantungen 63 besitzen einen Schenkel 63a, der in den jeweiligen Aufnahmeschlitz 110, 111 eingreift.

Zur Montage der Seitenwand 13 wird die Seitenwand gemäß Pfeilrichtung P1 von der freien Stirnseite des Befestigungsteils 30 mit dem Schenkel 62 in den Schlitz 39 eingeschoben und zwar in Richtung der Längserstreckung des Befestigungsteils 30.

Die Fig. 7 zeigt den gleichen Montageschritt der Seitenwand 13 an ihrer unteren Kante, was auch für die andere Seitenwand 12 gilt.

In entsprechender Weise werden auch die Boden- und Deckwand 14, 15 in die anderen längs verlaufenden Schlitze des Befestigungsteils 30 eingeschoben, so dass nach dem in Fig. 8 gezeigten Montageschritt der Schrank im Wesentlichen fertig montiert ist.

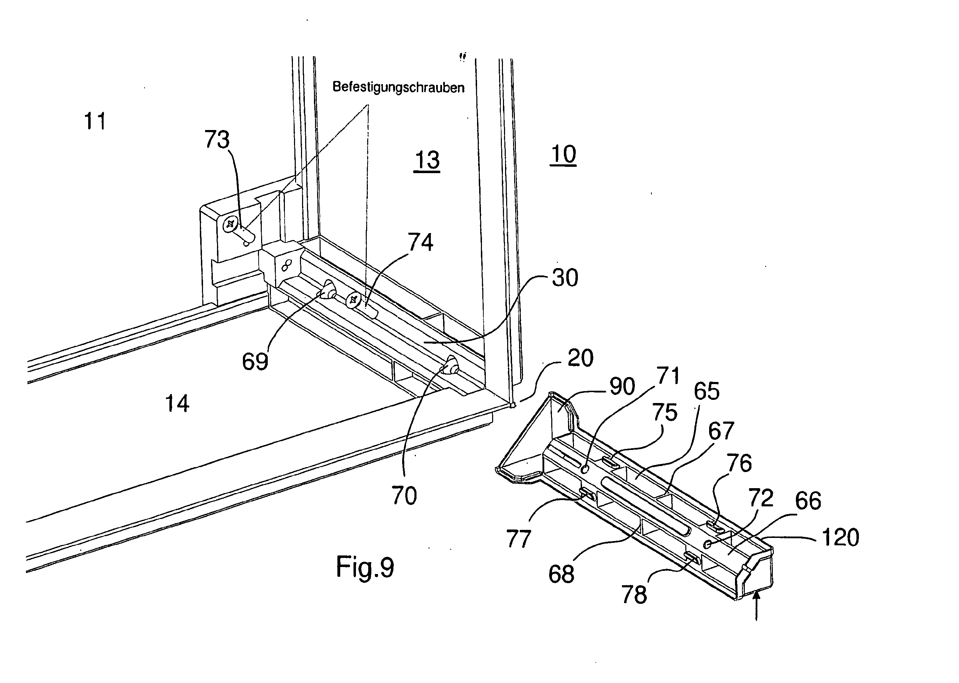

Es wird nun Bezug genommen auf die Fig. 9.

Die Fig. 9 zeigt das Befestigungsteil 30, welches in der Ecke 20 des Schaltschrankes 10 fertig montiert ist. Fig. 9 zeigt einen Einblick ins Innere des Schaltschrankes 10 mit der Rückwand 11, der Seitenwand 13 und der Bodenwand 14. Auf die Außenseite, also in den Raum 49, des Befestigungsteils 30 ist ein Außeneckteil 65 aufzusetzen, welches eine im Wesentlichen quadratische Form aufweist, wobei eine Ecke dieser quadratischen Querschnittsform abgeschrägt ist, so dass sich eine Passfläche 66 bildet, die zusammen mit den beidseitig daran anschließenden Stegebenen 67 und 68 die Form bildet, die in den Raum 49 zwischen den Flächen 36, 37 und der Stegfläche 35 eingesetzt werden kann. Die Passfläche 66 verläuft im montierten Zustand parallel zur Stegfläche 35.

Die Stegfläche 35 beziehungsweise der Steg 35 besitzt zwei Bohrungen 69 und 70, denen Gewindebohrungen 71 und 72 an dem Außeneckteil entsprechen. Von innen werden Befestigungsschrauben 73 und 74 durch die Bohrungen 69 und 70 hindurchgesteckt, so dass das Außeneckteil 65 mit dem Befestigungsteil 30 verschraubt wird. Im Bereich der Ebenen 67 und 68 besitzt das Außeneckteil leistenartige Vorsprünge 75 und 76 beziehungsweise 77 und 78, die in entsprechende Langlöcher 79 und 80 beziehungsweise 81 und 82 am Befestigungsteil im Bereich der Flächen 36, 37 einfügbar sind. Den Langlöchern 79, 80, 81 und 82 entsprechen Langlöchern 83 und 84 in den Stegen 61, durch die hindurch dann die Vorsprünge 75 bis 78 zum Festlegen der Seitenwand beziehungsweise der anderen Wände hindurch- und hineingreifen. Dadurch wird auch eine Verschiebung der Seitenwände beziehungsweise der Boden- und Deckwand in Richtung der Längserstreckung der Befestigungsteile 30 vermieden.

Die Fig. 10 zeigt den Schaltschrank 10 vor endgültiger Fertigstellung und zwar auf die Weise, dass die Außeneckteile 65 noch nicht montiert, sondern explosionsartig vor ihrer endgültigen Befestigungsstelle schweben. Die endgültige Fixierung erfolgt dadurch, dass die Außeneckteile in Pfeilrichtung P2, P3, P4 und P5 senkrecht auf die Inneneckteile beziehungsweise Befestigungsteile aufgesetzt und dann dort festgeschraubt werden. Es ergibt sich damit der Schaltschrank gemäß Fig. 1.

An den Außeneckteilen 65 ist an deren rückwandseitigem Ende eine Art Abdeckkappe 90 angeformt, die, wie auf Fig. 1 ersichtlich ist, einen rückwärtigen Bereich der Seitenwände, der Boden- und der Deckwand übergreift; hierfür ist an den hinteren Ecken der Seitenwände, der Boden- und Deckwand je eine Aussparung 100 vorgesehen, in die die Abdeckkappe 90 hineingreift und damit zu einer optisch ansprechenden Abdeckung führt.

An dem Außeneckteil sind umlaufende Dichtlippen 120 vorgesehen, die sich gegen die Außenflächen am Schaltschrank im Bereich des Außeneckteils 65 anlegen und so eine Schutzart IP54 erzeugen.

### Bezugszeichenliste

| | | | |
|---|---|---|---|
| 10 | Schutzschrank | 42 | Seitenwand der A. 40 |
| 11 | Rückwand | 43 | Außenfläche |
| 12 | Seitenwand | 44 | Außenfläche |
| 13 | Seitenwand | 45 | Außenfläche |
| 14 | Bodenwand | 46 | Aufnahmespalt |
| 15 | Deckwand | 47 | Schmalseitenfläche |
| 16 | Erste Abkantung | 48 | Schmalseitenfläche |
| 17 | Steg | 49 | Raum |
| 18 | Schenkel | 50 | Zapfen |
| 19 | Eck | 51 | Zapfen |
| 20 | Eck | 52 | Abschnitt |
| 21 | Aussparung | 52a | Abschnitt |
| 22 | Aussparung | 60 | Abkantung |
| 23 | Aussparung | 61 | Abkantungssteg |
| 24 | Aussparung | 62 | Abkantungsschenkel |
| 25 | Eck | 63 | Abkantungen |
| 30 | Befestigungsteil | 64 | Abkantungen |
| 31 | Halteplatte, Befestigungsplatte | 65 | Außeneckteil |
| | | 66 | Passfläche |
| 32 | Befestigungsabschnitt | 67 | Stegebene |
| 33 | Schenkeln | 68 | Stegebene |
| 34 | Schenkel | 69 | Bohrung |
| 35 | Zwischensteg | 70 | Bohrung |
| 36 | Schenkelfläche | 71 | Gewindebohrungen |
| 37 | Schenkelfläche | 72 | Gewindebohrungen |
| 38 | Schlitz | 73 | Befestigungsschraube |
| 39 | Schlitz | 74 | Befestigungsschraube |
| 40 | Aussparung | 75 | Vorsprung |
| 41 | Seitenwände der A. 40 | 76 | Vorsprung |
| 77 | Vorsprung | | |
| 78 | Vorsprung | | |
| 79 | Schlitz | | |
| 80 | Schlitz | | |
| 81 | Schlitz | | |
| 82 | Schlitz | | |
| 83 | Schlitz | | |
| 84 | Schlitz | | |
| 90 | Abdeckkappe | | |
| 100 | Aussparung | | |
| 110 | Aufnahmeschlitz | | |
| 111 | Aufnahmeschlitz | | |

## Patentansprüche

1. Elektrischer Schaltschrank (10) für eine elektrische Installationsverteilung, mit einer Rückwand (11), zwei Seitenwänden (12, 13), einer Boden- und einer Deckwand (14, 15), **dadurch gekennzeichnet, dass** die Rückwand (11) eine umlaufende, L-förmige erste Abkantung (16) aufweist, dass je ein Befestigungsteil (30) für die Seitenwände (12, 13), die Boden- und Deckwand (14, 15) vorgesehen ist, welches im Bereich der Ecken (19, 20, 25) der Rückwand (11) hinter die ersten Abkantungen (16) einschiebbar ist, und dass die Seitenwände (12, 13), die Boden- und Deckwand (14, 15) mit Wandabkantungen (60) in längs verlaufende Schlitze (38, 39) am Befestigungsteil (30) einschiebbar sind.

2. Schaltschrank nach Anspruch 1, **dadurch gekennzeichnet, dass** die Wandabkantungen (60) etwa L-förmig mit einem senkrecht zur Wandfläche verlaufenden Abkantungssteg und einem daran anschließenden Abkantungsschenkel (62) ausgebildet sind, welch letztere in je einen Schlitz (38, 39) am Befestigungsteil (30) in Längsrichtung des Befestigungsteiles (30) einschiebbar sind.

3. Schaltschrank nach Anspruch 2, **dadurch gekennzeichnet, dass** jeder Abkantungsschenkel (62) in einem Winkel von vorzugsweise zirka 45° nach innen - ausgehend von dem Abkantungssteg (61) - abgebogen sind, wobei sich der Winkel zwischen der Innenfläche des Abkantungsschenkels und der Seitenwände, der Boden- und Deckwand befindet.

4. Schaltschrank nach Anspruch 3, **dadurch gekennzeichnet, dass** die Schlitze (38, 39) im Befestigungsteil (30) parallel zueinander verlaufen und unter einem Winkel von vorzugsweise 45° bezogen auf die Seitenkanten der Rückwand (11) ausgerichtet sind, so dass die Abkantungsschenkel (62) in die Schlitze passen.

5. Schaltschrank nach einem der vorherigen Ansprüche, **dadurch gekennzeichnet, dass** an dem rückwandseitigen Ende jedes Befestigungsteils (30) ein Haltefuß (31) angeformt ist, der parallel zur Rückwandinnenfläche, auf dieser gleitend, in die jeweilige Ecke hinter die freien Schenkel (18) der L-förmigen ersten Abkantungen (17) einschiebbar ist.

6. Schaltschrank nach Anspruch 5, **dadurch gekennzeichnet, dass** am Haltefuß (31) je ein Aufnahmespalt (46) angeordnet ist, in den im montierten Zustand die Schenkel (18) der ersten Abkantungen (16) eingreifen.

7. Schaltschrank nach Anspruch 6, **dadurch gekennzeichnet, dass** innerhalb des Aufnahmespaltes (46) sägezahnartige Zapfen (50, 51) angeordnet sind, die im montierten Zustand in Aussparungen (21, 22) in den Schenkeln der ersten Abkantungen (16) eingreifen.

8. Schaltschrank nach Anspruch 7, **dadurch gekennzeichnet, dass** die Zapfen (50, 51) parallel zur Einschieberichtung des Haltefußes (31) auf das zugehörige Eck (19, 20, 25) verlaufen.

9. Schaltschrank nach Anspruch 5, **dadurch gekennzeichnet, dass** an dem Halte fuß (31) weitere Aufnahmeschlitze (110, 111) angeformt sind, in die weitere Abkantungen an den Seitenwänden, an der Deck- und Bodenwand (14, 15) einfügbar sind.

10. Schaltschrank nach einem der vorherigen Ansprüche, **dadurch gekennzeichnet, dass** das Befestigungsteil (30) einen Befestigungsabschnitt (32) aufweist, der an dem Haltefuß (31) angeformt ist.

11. Schaltschrank nach Anspruch 10, **dadurch gekennzeichnet, dass** der Befestigungsabschnitt (32) etwa eine L-Form aufweist, und dass die bezogen auf den Schaltschrank (10) nach außen gerichteten Schenkelflächen (36, 37) der Schenkel (33, 34) des Befestigungsabschnittes (32) zusammen mit einem schräg dazu verlaufenden Steg (35) einen Aufnahmeraum (49) bilden, wobei die Schlitze (38, 39) an der Übergangsstelle zwischen den Schenkelflächen (36, 37) und dem Steg (35) angeordnet sind. Schaltschrank

12. Schaltschrank nach Anspruch 6, **dadurch gekennzeichnet, dass** sich der Aufnahmespalt (46) in dem Bereich des durch die Schenkelflächen (36, 37) und den Steg (35) gebildeten Aufnahmeraumes (49) befindet.

13. Schaltschrank nach Anspruch 11, **dadurch gekennzeichnet, dass** in den Schenkelflächen (36, 37) Langlöcher (79, 80, 81, 82) vorgesehen sind.

14. Schaltschrank nach Anspruch 11, **dadurch gekennzeichnet, dass** in dem zwischen den Schenkeln (33, 34), den Schenkelflächen (36, 37) und der Stegfläche (35) befindlichem Aufnahmeraum (49) jedes Befestigungsteil (30) je ein Außeneckteil (65) von außen- bezogen auf den Schaltschrank einsetzbar und am Befestigungsabschnitt (32) befestigbar ist.

15. Schaltschrank nach Anspruch 14, **dadurch gekennzeichnet dass** das Außeneckteil (65) einen etwa rechteckigen Querschnitt aufweist, wobei zwischen zwei senkrecht zueinander verlaufenden Eckteilebenen (67, 68) eine Passfläche (66) vorgesehen ist, die der Stegfläche entspricht, so dass im montierten Zustand die Ebenen (67, 68) und die Passfläche 66 jeweils parallel zu den Schenkelflächen (36, 37) und zur Stegfläche (35) verlaufen.

16. Schaltschrank nach Anspruch 15, **dadurch gekennzeichnet, dass** in den Eckteilebenen (67, 68) Vorsprünge (75, 76; 77, 78) angeformt sind, die im montierten Zustand in die entsprechenden Langlöcher (79, 80; 81, 82) hineinpassen.

17. Schaltschrank nach Anspruch 16, **dadurch gekennzeichnet, dass** an den Abkantungsstegen (61) der Seitenwandungen (12, 13), der Boden- und Deckwand (14, 15), den Langlöchern (79, 80, 81, 82) entsprechende weitere Langlöcher (83, 84) vorgesehen sind, und dass bei der Montage des Außeneckteils zur Verspannung der Seitenwände (12, 13), der Deck- und Bodenwand (14, 15) an dem Befestigungsteil (30) die Vorsprünge (75, 76; 77, 78) durch die weiteren Langlöcher (83, 84) an den zweiten Abkantungen (61) und die Langlöcher (79, 80; 81, 82) zur Fixierung hindurchgreifen.

18. Schaltschrank nach Anspruch 14, **dadurch gekennzeichnet, dass** das Außeneckteil am Befestigungsabschnitt durch von innen durch den Befestigungsabschnitt hindurch in das Außeneckteil einschraubbare Befestigungsschrauben (73, 74) fixierbar ist.

19. Schaltschrank nach Anspruch 14, **dadurch gekennzeichnet, dass** am Außeneckteil umlaufenden Dichtlippen (120) aus weichelastischem Material vorgesehen sind, die gegen die Außenflächen der Seitenwände (12, 13), der Boden- und Deckwand (14, 15) abdichtend zum Anliegen kommen.

## Claims

1. Electrical switchgear cabinet (10) for an electrical service distribution panel, having a rear wall (11), two side walls (12, 13), a base wall and a ceiling wall (14, 15), **characterized in that** the rear wall (11) has a peripheral L-shaped first bent edge (16), **in that** in each case one attachment part (30) is provided for the side walls (12, 13), the base wall and the ceiling wall (14, 15), which attachment part can be inserted behind the first bent edges (16) in the region of the corners (19, 20, 25) of the rear wall (11), and **in that** the side walls (12, 13), the base wall and the ceiling wall (14, 15) can be inserted into longitudinally running slots (38, 39) on the attachment part (30) by way of bent wall edges (60).

2. Switchgear cabinet according to Claim 1, **characterized in that** bent wall edges (60) are formed in an approximately L-shaped manner with a bent edge crosspiece which runs at right angles to the wall face and a bent edge limb (62) which adjoins said bent edge crosspiece, it being possible for the latter to be inserted into in each case one slot (38, 39) on the attachment part (30) in the longitudinal direction of the attachment part (30).

3. Switchgear cabinet according to Claim 2, **characterized in that** each bent edge limb (62) is bent inward - starting from the bent edge crosspiece (61) - at an angle of preferably approximately 45°, with the angle being located between the inner face of the bent edge limb and the side walls, the base wall and the ceiling wall.

4. Switchgear cabinet according to Claim 3, **characterized in that** the slots (38, 39) in the attachment part (30) run parallel to one another and are oriented at an angle of preferably 45° in relation to the side edges of the rear wall (11), and therefore the bent edge limbs (62) fit into the slots.

5. Switchgear cabinet according to one of the preceding claims, **characterized in that** a retaining foot (31) is integrally formed on the rear wall-side end of each attachment part (30), it being possible for said retaining foot to be inserted parallel to the rear wall inner face, so as to slide on it, into the respective corner behind the free limbs (18) of the L-shaped first bent edges (17).

6. Switchgear cabinet according to Claim 5, **characterized in that** in each case a receiving gap (46) is arranged in the retaining foot (31), the limbs (18) of the first bent edges (16) engaging in said receiving gap in the assembled state.

7. Switchgear cabinet according to Claim 6, **characterized in that** sawtooth-like pins (50, 51) are arranged within the receiving gap (46), said sawtooth-like pins engaging in cutouts (21, 22) in the limbs of the first bent edges (16) in the assembled state.

8. Switchgear cabinet according to Claim 7, **characterized in that** the pins (50, 51) run parallel to the insertion direction of the retaining foot (31) onto the associated corner (19, 20, 25).

9. Switchgear cabinet according to Claim 5, **characterized in that** further receiving slots (110, 111) are integrally formed on the retaining foot (31), it being possible for further bent edges on the side walls, on the ceiling wall and on the base wall (14, 15) to be inserted into said receiving slots.

10. Switchgear cabinet according to one of the preceding claims, **characterized in that** the attachment part (30) has an attachment section (32) which is integrally formed on the retaining foot (31).

11. Switchgear cabinet according to Claim 10, **characterized in that** the attachment section (32) has an approximate L-shape, and **in that** the limb faces (36, 37) of the limbs (33, 34) of the attachment section (32) which are oriented outward in relation to the switchgear cabinet (10) form a receiving space (49) together with a crosspiece (35) which runs obliquely to said limb faces, with the slots (38, 39) being arranged at the transition point between the limb faces (36, 37) and the crosspiece (35).

12. Switchgear cabinet according to Claim 6, **characterized in that** the receiving gap (46) is located in the region of the receiving space (49) which is formed by the limb faces (36, 37) and the crosspiece (35).

13. Switchgear cabinet according to Claim 11, **characterized in that** elongate holes (79, 80, 81, 82) are provided in the limb faces (36, 37).

14. Switchgear cabinet according to Claim 11, **characterized in that** in each case an outer corner part (65) can be inserted from the outside - in relation to the switchgear cabinets - into the accommodation receiving space (49), which is located between the limbs (33, 34), the limb faces (36, 37) and the crosspiece face (35), of each attachment part (30) and can be attached to the attachment section (32).

15. Switchgear cabinet according to Claim 14, **characterized in that** the outer corner part (65) has an approximately rectangular cross section, with a fitting face (66) being provided between two corner part planes (67, 68) which run at right angles to one another, said fitting face corresponding to the crosspiece face, and therefore the planes (67, 68) and the fitting face (66) in each case running parallel to the limb faces (36, 37) and to the crosspiece face (35) in the assembled state.

16. Switchgear cabinet according to Claim 15, **characterized in that** projections (75, 76; 77, 78) are integrally formed in the corner part planes (67, 68), said projections fitting into the corresponding elongate holes (79, 80; 81, 82) in the assembled state.

17. Switchgear cabinet according to Claim 16, **characterized in that** further elongate holes (83, 84) which correspond to the elongate holes (79, 80, 81, 82) are provided on the bent edge crosspieces (61) of the side walls (12, 13), the base wall and sealing wall (14, 15), and **in that** the projections (75, 76; 77, 78) pass through the further elongate holes (83, 84) in the second bent edges (61) and the elongate holes (79, 80; 81, 82) for fixing purpose when the outer corner part is mounted in order to brace the side walls (12, 13), the ceiling wall and base wall (14, 15) to the attachment part (30).

18. Switchgear cabinet according to Claim 14, **characterized in that** the outer corner part can be fixed to the attachment section by attachment screws (73, 74) which can be screwed from inside, through the attachment section, into the outer corner part.

19. Switchgear cabinet according to Claim 14, **characterized in that** peripheral sealing lips (120) comprising soft-elastic material are provided on the outer corner part, said sealing lips coming to rest in a sealing manner against the outer faces of the side walls (12, 13), the base and ceiling wall (14, 15)

## Revendications

1. Armoire de distribution électrique (10) pour une distribution d'installation électrique, comprenant une paroi arrière (11), deux parois latérales (12, 13), une paroi de fond et une paroi de recouvrement (14, 15), **caractérisée en ce que** la paroi arrière (11) présente une première partie périphérique coudée en forme de L (16), **en ce qu'**il est prévu une partie de fixation respective (30) pour les parois latérales (12, 13), la paroi de fond et la paroi de recouvrement (14, 15), laquelle partie de fixation peut être enfoncée derrière les premières parties coudées (16) dans la région des coins (19, 20, 25) de la paroi arrière (11), et **en ce que** les parois latérales (12, 13), la paroi de fond et la paroi de recouvrement (14, 15) peuvent être enfoncées sur la partie de fixation (30) avec des parties de paroi coudées (60) dans des fentes (38, 39) s'étendant longitudinalement.

2. Armoire de distribution selon la revendication 1, **caractérisée en ce que** les parties de paroi coudées (60) sont réalisées approximativement en forme de L avec une membrure de partie coudée s'étendant perpendiculairement à la surface de paroi et une branche de partie coudée (62) s'y raccordant, ces dernières pouvant être enfoncées dans la direction longitudinale de la partie de fixation (30) dans une fente respective (38, 39) sur la partie de fixation (30).

3. Armoire de distribution selon la revendication 2, **caractérisée en ce que** chaque branche de partie coudée (62) est recourbée suivant un angle de préférence d'environ 45° vers l'intérieur, à partir de la membrure de partie coudée (61), l'angle étant formé entre la surface interne de la branche de la partie coudée et les parois latérales, la paroi de fond et la paroi de recouvrement.

4. Armoire de distribution selon la revendication 3, **caractérisée en ce que** les fentes (38, 39) s'étendent parallèlement l'une à l'autre dans la partie de fixation (30) et sont orientées suivant un angle de préférence de 45° par rapport aux arêtes latérales de la paroi arrière (11), de telle sorte que les branches de la partie coudée (62) s'adaptent dans les fentes.

5. Armoire de distribution selon l'une quelconque des revendications précédentes, **caractérisée en ce qu'**une base de retenue (31) est façonnée au niveau de l'extrémité du côté de la paroi arrière de chaque partie de fixation (30), laquelle base de retenue peut être enfoncée parallèlement à la surface interne de la paroi arrière, en glissant sur celle-ci, dans le coin respectif derrière les branches libres (18) des premières parties coudées (17) en forme de L.

6. Armoire de distribution selon la revendication 5, **caractérisée en ce qu'**un interstice de réception (46) est à chaque fois disposé au niveau de la base de retenue (31), dans lesquels interstices de réception s'engagent, dans l'état monté, les branches (18) des premières parties coudées (16).

7. Armoire de distribution selon la revendication 6, **caractérisée en ce que** des tourillons (50, 51) en forme de dents de scie sont disposés à l'intérieur de l'interstice de réception (46), lesquels tourillons, dans l'état monté, viennent en prise dans des évidements (21, 22) dans les branches des premières parties coudées (16).

8. Armoire de distribution selon la revendication 7, **caractérisée en ce que** les tourillons (50, 51) s'étendent parallèlement à la direction d'enfoncement de la base de retenue (31) sur le coin associé (19, 20, 25).

9. Armoire de distribution selon la revendication 5, **caractérisée en ce que** d'autres fentes de réception (110, 111) sont façonnées sur la base de retenue (31), dans lesquelles fentes de réception peuvent être introduites d'autres parties coudées au niveau des parois latérales, de la paroi de recouvrement, et de la paroi de fond (14, 15).

10. Armoire de distribution selon l'une quelconque des revendications précédentes, **caractérisée en ce que** la partie de fixation (30) présente une portion de fixation (32) qui est façonnée sur la base de retenue (31).

11. Armoire de distribution selon la revendication 10, **caractérisée en ce que** la portion de fixation (32) présente une forme approximativement en L, et **en ce que** les surfaces (36, 37) des branches (33, 34) de la portion de fixation (32) orientées vers l'extérieur par rapport à l'armoire de distribution (10) forment, conjointement avec une membrure (35) s'étendant obliquement par rapport à elles, un espace de réception (49), les fentes (38, 39) étant disposées au niveau du point de transition entre les surfaces (36, 37) des branches et la membrure (35).

12. Armoire de distribution selon la revendication 6, **caractérisée en ce que** l'interstice de réception (46) se trouve dans la région de l'espace de réception (49) formé par les surfaces (36, 37) des branches et la membrure (35).

13. Armoire de distribution selon la revendication 11, **caractérisée en ce que** des trous oblongs (79, 80, 81, 82) sont prévus dans les surfaces (36, 37) des branches.

14. Armoire de distribution selon la revendication 11, **caractérisée en ce que** dans l'espace de réception (49) de chaque partie de fixation (30) se trouvant entre les branches (33, 34), les surfaces (36, 37) des branches et la surface (35) de la membrure peut être insérée une partie de coin extérieuree respective (65) depuis l'extérieur par rapport à l'armoire de distribution, cette partie de coin extérieure pouvant être fixée à la portion de fixation (32).

15. Armoire de distribution selon la revendication 14, **caractérisée en ce que** la partie de coin extérieure (65) présente une section transversale approximativement rectangulaire, une surface d'ajustement (66) étant prévue entre deux plans de parties de coin (67, 68) s'étendant perpendiculairement l'un à l'autre, ladite surface d'ajustement correspondant à la surface de membrure, de telle sorte que dans l'état monté, les plans (67, 68) et la surface d'ajustement (66) s'étendent à chaque fois parallèlement aux surfaces (36, 37) des branches et à la surface (35) de la membrure.

16. Armoire de distribution selon la revendication 15, **caractérisée en ce que** des saillies (75, 76; 77, 78) sont façonnées dans les plans de parties de coin (67, 68), lesquelles saillies s'adaptent dans l'état monté à l'intérieur des trous oblongs correspondants (79, 80 ; 81, 82).

17. Armoire de distribution selon la revendication 16, **caractérisée en ce que** des trous oblongs supplémentaires (83, 84) sont prévus au niveau des membrures des parties coudées (61) des parois latérales (12, 13), de la paroi de fond et de la paroi de recouvrement (14, 15), lesquels correspondent aux trous oblongs (79, 80, 81, 82), et **en ce que** lors du montage de la partie de coin extérieuree en vue de serrer les parois latérales (12, 13), la paroi de recouvrement et la paroi de fond (14, 15) à la partie de fixation (30), les saillies (75, 76 ; 77, 78) s'engagent à travers les trous oblongs supplémentaires (83, 84) au niveau des deuxièmes parties coudées (61) et à travers les trous oblongs (79, 80 ; 81, 82) en vue de la fixation.

18. Armoire de distribution selon la revendication 14, **caractérisée en ce que** la partie de coin extérieuree peut être fixée à la portion de fixation par des vis de fixation (73, 74) pouvant être vissées depuis l'intérieur à travers la portion de fixation dans la partie de coin extérieuree.

19. Armoire de distribution selon la revendication 14, **caractérisée en ce que** des lèvres d'étanchéité périphériques (120) sur la partie de coin extérieuree en matériau élastique souple sont prévues, lesquelles viennent s'appliquer de manière hermétique contre les surfaces extérieures des parois latérales (12, 13), de la paroi de fond et de la paroi de recouvrement (14, 15).
